# EUROPEAN PATENT APPLICATION

(11) **EP 1 705 566 A1**
(43) Date of publication of application: **27.09.2006**
(21) Application number: 06005530.8
(22) Date of filing: 17.03.2006
(51) Int. Cl.: G06F 9/445

(54) **Server system and online software update method**

(30) Priority: 22.03.2005 JP 2005082380
(71) Applicant: NEC Corporation, Minato-ku Tokyo (JP)
(72) Inventor: Taguchi, Hiroshi, Minato-ku Tokyo (JP)
(74) Representative: Glawe, Delfs, Moll

(57) **Abstract**

A server delivers new software to each of clients through the network. After delivering new software, the server sends a notification of switchover from old software to new software to each of the clients through the network. Each client loads the new software having been received on a memory. Receiving the notification from the server, each client switches the old software to the new software. The switchover operation at client is carried out in short time by rewriting address on memory without suspension of a service. In case of canceling the update, the reversion operation from new software to old software is carried out in an analogous way to the switchover operation.

## Description

### BACKGROUND OF THE INVENTION

### 1. Field of the Invention

The present invention relates to a software update of a general server system constituted of a server and a plurality of clients, and particularly relates to an online software update method of updating software for both of a server and clients through a network.

### 2. Description of the Related Art

Various technologies have been proposed in respect of software updates for a plurality of processing devices connected through a network. For example, Japanese Patent Laid-open No. 9-62626 proposes a system in which an online test is carried out, and Japanese Patent Laid-open No. 2002-366361 proposes a system in which a program is installed by being delivered through a network.

Such proposed methods make it possible to carry out software instillation and a test for a software update through a network. However, rebooting of machines of a server and clients, an OS (Operating system), or a service is required after the instillation and the test. This rebooting is for applying the software update to the service. As described above, in the conventional systems, there has been a problem that rebooting of machines, an OS, and a service is required for the software update, whereby the rebooting interrupts the service.

Furthermore, in a server-client system, clients and a server perform processing by exchanging predetermined messages each other in accordance with a predetermined sequence. Still further problem exists in a software update involving a change in an interface such as a message format or a sequence. The problem is that a software update cannot be carried out for only any of a client and a server. An interface mismatch is caused by the software update for only any of the server and client, the update involving the change in the interface. In such an update involving a change in an interface, the software update needs to be carried out for both of the client and the server simultaneously. That is, the following procedure is taken. First, a system administrator or an operator suspends a service by stopping programs simultaneously both in the server and the client which relate to the software update. Next, software for both of the server and the client is updated. Finally, the service for both of the server and the client is restarted by restarting the programs both in the server and the client simultaneously. In this procedure, the problem becomes more serious if a large number of services and machines are targets of the software update, and if a large number of steps in the software update operation are not automated and operated by manually by a person, whereby the service is suspended for a long time.

### SUMMARY OF THE INVENTION

The present invention solves the above-described problems in a client-server system. An object of the present invention is to provide a server system and an online software update method which are capable of updating software for a server and client machines which relate thereto without suspension of a service for a long time, and capable of canceling the update, in the client-server system.

To achieve the object, a server delivers new software to each of clients through the network. After delivering new software, the server sends a notification of switchover from old software to new software to each of the clients through the network. Each client loads the new software having been received on a memory. Receiving the notification from the server, each client switches the old software to the new software. The switchover operation at client is carried out in short time by rewriting address on memory without interruption of a service. In case of canceling the update, the reversion operation from new software to old software is carried out in an analogous way to the switchover operation.

### BRIEF DESCRIPTION OF THE DRAWINGS

The above and other objects, features and advantages of the present invention will become more apparent from the following detailed description when taken in conjunction with the accompanying drawings wherein:
FIG. 1 is a system chart showing an entire configuration according to an embodiment of the present invention;
FIG. 2 is a block diagram showing a sequence flow according to the embodiment of the present invention;
FIG. 3 is a diagram showing a block constitution of a server 1 and a client 21 according to the embodiment of the present invention;
FIG. 4 is a diagram explaining operations for switchover on a memory to which an update file is applied in a client according to the embodiment of the present invention;
FIG. 5 is a diagram explaining operations for canceling the applied update on the memory in the client according to the embodiment of the present invention;
FIG. 6 is a flowchart showing operations at a time of switchover of software and at the time when a failure occurs during the switchover of software according to the embodiment of the present invention; and
FIG. 7 is a flowchart showing an operation for a reversion of software when a failure occurs in the software having been switched after the switchover of the software according to the embodiment of the present invention.

### DETAILED DESCRIPTION OF THE EXEMPLARY EMBODIMENTS

An embodiment of the present invention will be described in detail with reference to the drawings.

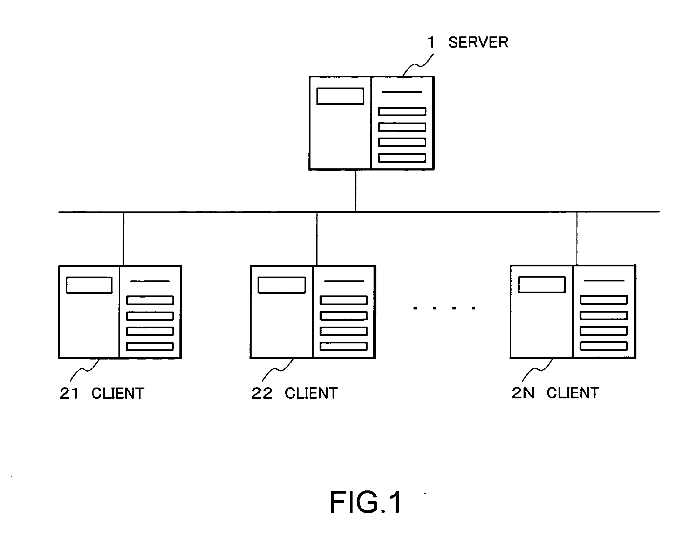

FIG. 1 is one configuration example for explaining the embodiment. A system shown in FIG. 1 is constituted of a server 1 and a number N of clients 21 to 2N. The clients 21 to 2N are connected to the server 1 through a network, and can communicate therewith.

Note that the server 1 and the clients 21 to 2N respectively show a_role relationship between the server and the clients regarding online software update processing of the present invention. The server 1 is a server in the online software update processing of the present invention, and the clients 21 to 2N are clients in the online software update processing of the present invention. With respect to a service ordinary provided by the system in FIG. 1, any of the server 1 and the clients 21 to 2N may play a role of a server or a client. For example, the original service may be provided by the clients 21 and 22 as servers, and by the server 1 and clients 23 to 2N as clients, which clients and servers proceeds processing by communicating one to another. Alternatively, the role relationship in the embodiment may perfectly agree with the role relationship in the original service. In other words, a relationship between clients and a server in the original service is irrelevant to the relationship between the clients and the server in operations of the present invention.

Following descriptions relate to the operations of the present invention, and the clients 21 to 2N respectively have the same configurations. Additionally, it is assumed that confirmation responses including ones not described between the server and each of clients during communications are made appropriately.

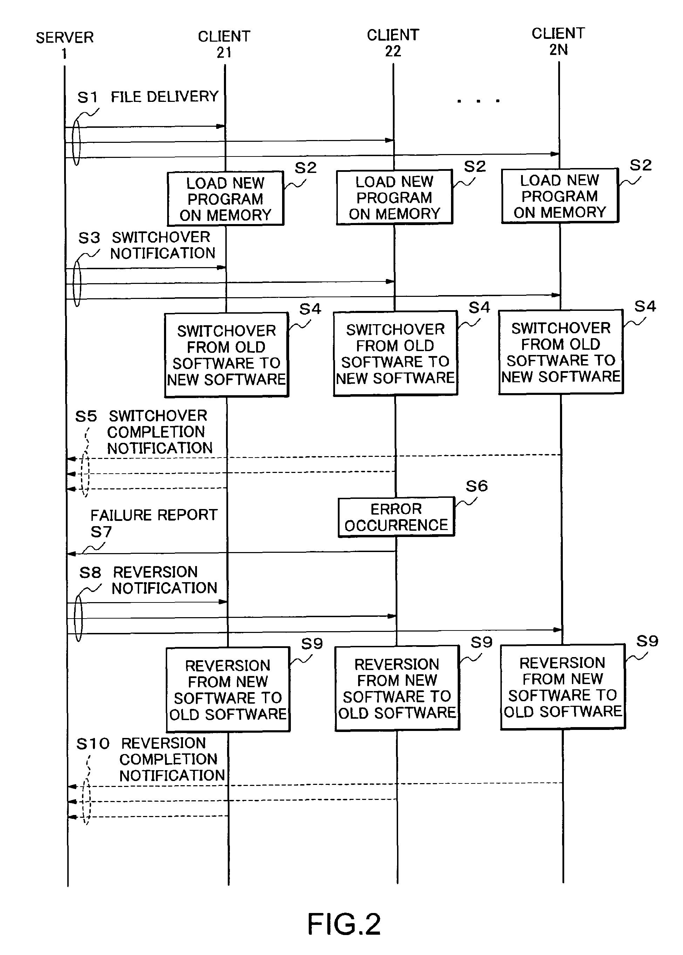

FIG. 2 shows communications between the server 1 and the clients, and a processing flow thereof during the software update. The server 1 delivers files of new software each corresponding to each of the clients to respective target clients of the software update, through a network (Step S1.) Upon receiving the file, the client loads the new software included in the file and goes in wait status (Step S2) . Note that the software to be updated may be a whole program, functions, libraries, a driver, further, or data.

After each of the target clients of the software update has loaded the new software on each of the memories, the server 1 sends a switchover notification to each of the target clients in order that the clients start applying the new software (Step S3). Upon receiving the switchover notification, each of the clients switches from old software on the memory to the new software on the memory while maintaining operation of a service (Step S4). After the switchover processing has been properly completed, each of the clients makes a response indicating the proper completion to the server (Step S5).

If any of the clients detects an error or a failure in the new software having been applied, the client makes a failure report to the server 1 (Steps 6 and 7). FIG. 2 shows a case where the client 22 detects a failure.

Upon receiving the failure report of the new software from the client, the server 1 decides which clients and programs should revert. The client and program which should revert are, for example, clients and programs to which the same files have been applied for the software update, and in which the same problems may occur. For another example, they are a program which has an interface with the program in which the failure has occurred and thereby may be affected by the program, and the like. The server 1 sends a reversion notification to each of the clients having decided to revert, in order that each of the clients cancels the new software and switches to the old software (Step S8). Upon receiving the reversion notification from the server 1, each of the clients reverts from the new software to the old software on the memory without suspending the service. After properly completing the reversion processing, each of the clients makes a response on the completion to the server (S10).

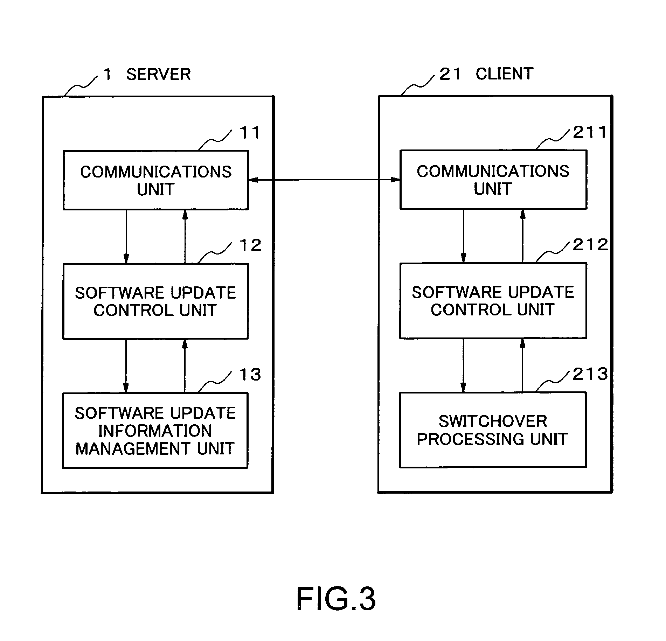

FIG. 3 shows configurations respectively of the server 1 and the client 21. All of the clients 21 to 2N have the same configurations.

As shown in FIG. 3, the server 1 includes a communications unit 11, a software update control unit 12, and a software update information management unit 13.

The software update information management unit 13 manages files to be delivered to the respective clients 21 to 2N, and statuses of the software updates of each client 21 to 2N. After delivering files of the new programs, which are corresponding to each of the clients, the software update control unit 12 issues a switchover notification to each of the clients. The communications unit 11 sends the files to be delivered and the notifications issued by the software update control unit 12 to the respective clients.

In the client 21, a software update control unit 212 receives the file of the new program from the server 1 through a communications unit 211. The software update control unit 212 transfers the received file to a switchover processing unit 213. The switchover processing unit 213 loads the file as a new program on the memory. When the communications unit 211 receives the switchover notification from the server 1, the software update control unit 212 sends a switchover instruction to the switchover processing unit 213. Receiving the switchover instruction from the software update control unit 212, the switchover processing unit 213 executes processing of switchover from the old program to the new program. When the switchover processing is properly completed, the switchover processing unit 213 makes a report on the completion to the software update control unit 212. Upon receiving the report on the success of the processing of switchover, the software update control unit 212 sends a switchover completion notification to the server 1 through the communications unit 211. The software update processing unit 12 of the server 1 receives notifications from the respective clients. By receiving the notifications, the software update processing unit 12 confirms whether or not the switchover in the respective clients has properly done. The software update processing unit 12 notifies the software update information management unit 13 of the results of the switchover processing of the respective clients. The software update information management unit 13 records therein software update status of the respective clients as a software update history.

The software update information management unit 13 provides information for judging dependence of the software to be updated to the software update control unit 12, based on the software update history. For example, the software update information management unit 13 provides information to the software update control unit 12 at a specific point, the information having extracted the clients and the software, which were updated at the same time, from the recorded software update history.

If there are software updates which involves plural clients and they are independent each other, they should be packed into one group for a task of software update which should be carried out at same time. The software update information management unit 13 holds history information of software update that which software update belongs to which task and when each task were performed. By referring the information of the software update information management unit 13, the software update control unit 12 easily identifies a series of the software and the clients which are independent each other, and decides which software update should be reverted when the software update control unit 12 receives a failure report.

In the client 21, if a failure of the new software has been detected, or if the switchover processing has failed, the software update control unit 212 makes a failure report to the server 1 through the communications unit 211. Upon receiving the failure notification, the server 1 decides which client and which software should revert from and revert to, by referring to the information of the software update information management unit 13. The software update information management unit 13, for example, carries out the reversion to the stage before the failure has occurred in a manner of a roll back to the software update, in accordance with the software update history of the software update information management unit 13. The software update control unit 12 sends a reversion notification as well as information on the old and new software to which the reversion is to be made, through the communications unit 11, to each of the clients having been decided to require the reversion. In each of the clients having received the reversion notification, the software update control unit 212 gives the information on the software to revert to the switchover processing unit 213, and instructs to perform the reversion. The switchover processing unit 213 executes the processing of the reversion from the new software to the old software in accordance with the instruction and the information from the software update control unit 212. After completing the reversion, the switchover processing unit 213 informs the software update control unit 212 of the completion. Upon receiving the notification of the completion of the reversion, the software update control unit 212 sends a reversion completion notification to the server 1. Upon receiving the reversion completion notification, the software update control unit 12 of the server 1 sends a result of the reversion at each client to the software update information management unit 13. The software update information management unit 13 updates its information reflecting the information received from the software update control unit 12.

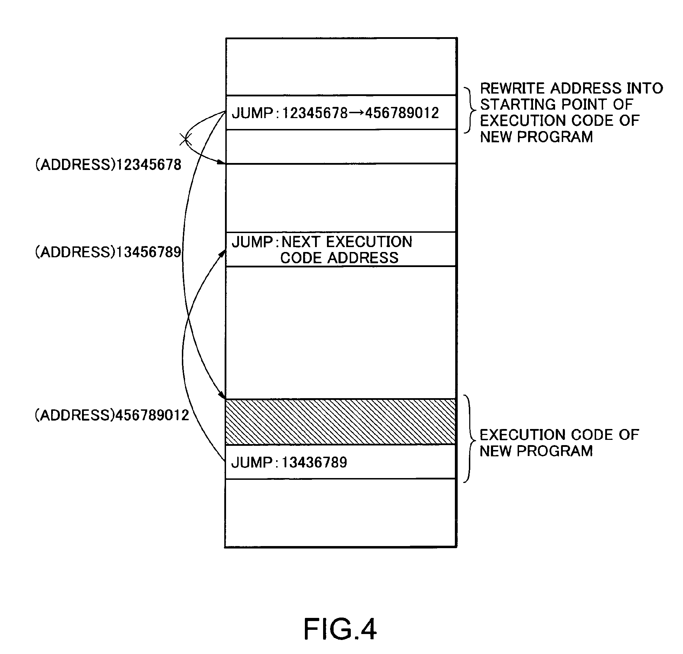

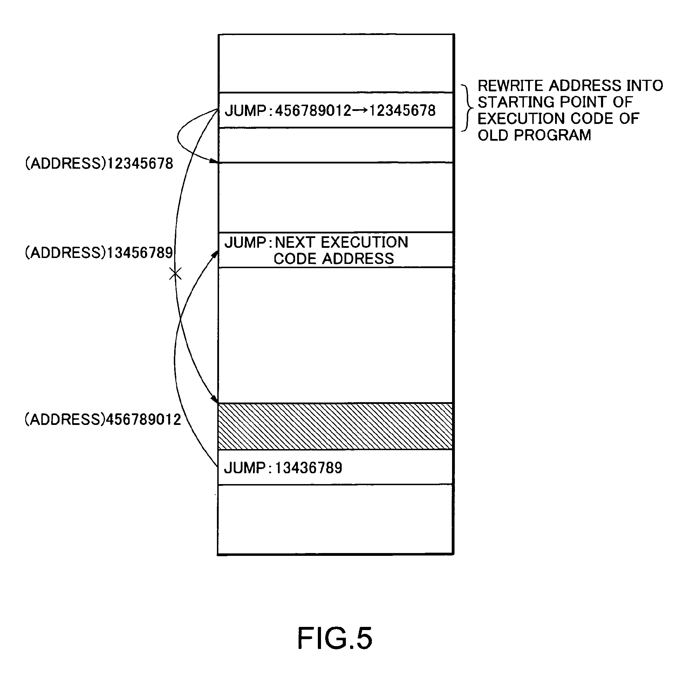

FIGs. 4 and 5 are diagrams for explaining operations for the switchover from the old software to the new software and for the reversion from the new software to the old software. FIGs. 4 and 5 schematically show the states of the memory respectively. Note that an explanation is given hereinbelow taking a specific example where the target old and new software of the switchover and the reversion are the programs (execution codes).

FIG. 4 shows a state where the switchover processing unit 213 loads the new program on the memory for the purpose of the switchover from the old program to the new program. The old program is placed on the memory from an address of 12345678. The switchover processing unit 213 has loaded the new program on the memory from an address of 456789012. Here, it is assumed that both of the addresses 456789012 and 12345678 are starting addresses respectively of the new and old programs with respect to positioning in the memory, and are also entry points respectively of the new and old programs.

The switchover processing unit 213 executes the switchover from the old program to the new program by rewriting a program code of calling part on the memory. The program code of the calling part includes a branch instruction, a jump instruction, and an interrupt vector, or the like. The switchover processing unit 213 rewrites destination address information in the program code of the calling part from an address which indicates the old program of 12345687 to an address which indicates the new program of 456789012. Accordingly, the switchover is carried out in order that processing flow, which has branched from the call source to the old program, branches to the new program.

FIG. 5 is a diagram for explaining the reversion processing from the new program to the old program. The new and old programs are loaded on the memory as in the case shown in FIG. 4. The switchover processing unit 213 executes the reversion as in the case of the switchover. The switchover processing unit 213 rewrites the address in the jump instruction or in the interrupt vector, from the address of 456789012 which indicates the new programto the address of 12345687 which indicates the old program. This rewriting changes the flow of branch at calling point from the new program to the old program.

Note that if the new and old software which are the targets of the switchover and the reversion are not execution codes but, for example, data, it is possible to modify an address, which is referred to for the target data, such as a label or a symbol instead of rewriting the address referred to as a branch destination.

The memory amount that the switchover processing unit 213 needs to rewrite in the switchover and reversion processing is likely equivalent to less than one-hundred words at most, though there are differences depending on an execution environment of the program to be switched, that is, depending on types of a CPU, an OS, and a loader. For this reason, the switchover processing unit 213 completes the switchover or reversion processing within a predetermined considerably short time, for example, within a few machine cycles at least or within a time slice of a multitasking OS at most.

With such a short time, switchover of the program becomes possible while suspending the operations of the related programs and service only for a time period necessary for the switchover and the reversion.

The time necessary for the processing for the file delivery and the loading of programs or software on the memory before the switchover largely varies depending on a file size and available bandwidth of the network for the file delivery. Accordingly, the completion of the processing for the file delivery and the loading of programs or software on the memory within a predetermined time cannot be ensured. In this embodiment, each of the clients executes only the switchover and reversion processing ensured to be completed within a predetermined time in response to the notification sent from the server 1. For this reason, the software update without suspending the service for a long time is achieved by simultaneously switching the programs of the plurality of clients in synchronism with one to another.

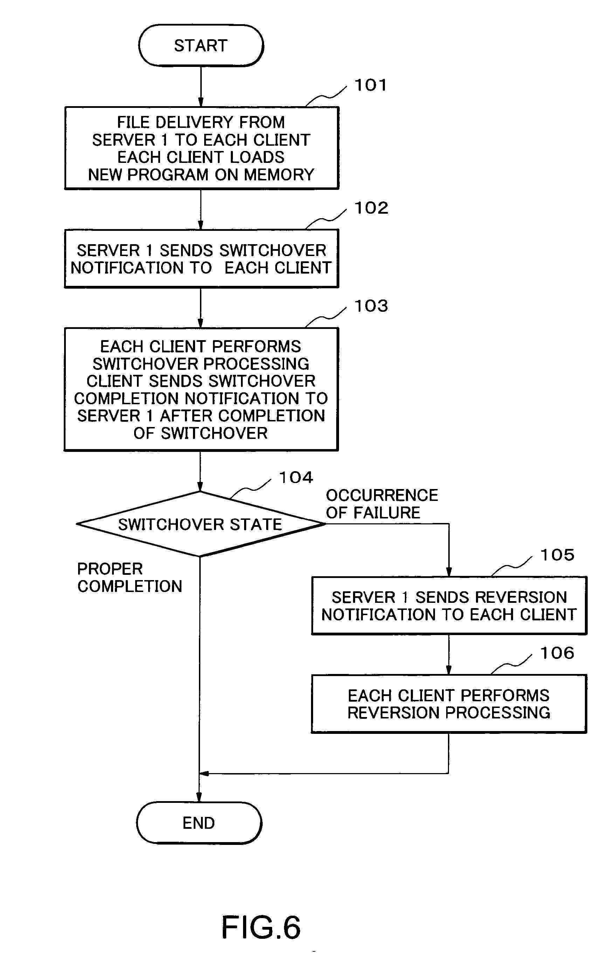

FIG. 6 shows a flow of the switchover processing of the server 1 and the clients 21 to 2N. First, the server 1 delivers a file of a new program to each of the target clients of the software update. The client having received the file fetches the new program from the received file, and loads the new program on the memory (101). Thereafter, the server 1 sends the switchover notification to the client (102). The client having received the switchover notification executes the switchover processing. The client having properly completed the switchover sends the switchover completion notification to the server 1(103). The client not having properly completed the switchover sends the failure notification to the server 1 (not shown). The server 1 receives the switchover completion notification or the failure report from each of the clients, and decides the state of the program update in each of the clients (104). If any of the clients has not succeeded in the switchover, the server 1 sends the reversion notification to each of the target clients in order that the clients execute the reversion (105, 106).

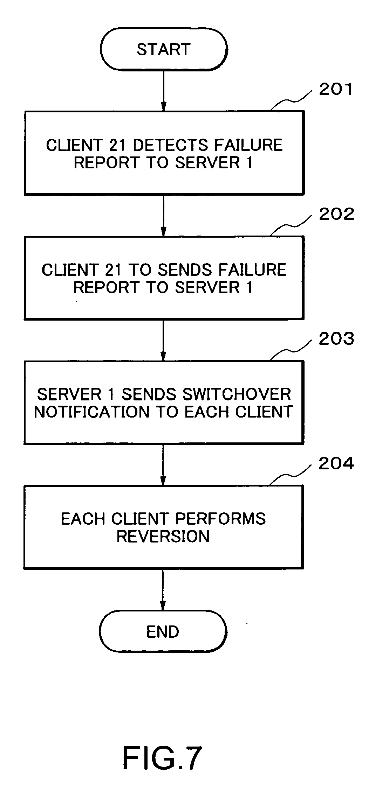

FIG. 7 shows a flow of processing of the reversion in the case where the client has made the failure report. FIG. 7 shows the case where the failure has been detected in the client 21. Upon detecting the failure of the new software (201), the client 21 sends the failure report to the server 1 (202) . Upon receiving the failure report, the server 1 identifies which client and software should revert based on contents of the failure report and the information of the software update history in the software update information management unit 13. Thereafter, the server 1 sends the notification of the reversion of the identified software to each of the clients having been identified (203) . Each of the clients having received the reversion notification carries out the instructed reversion of the software (201).

In this embodiment, it is made possible to carry out the software update in a short time by directly rewriting the memory. Accordingly, the conventional problemthat a service is suspended for a long time because of a software update is solved.

Additionally, owing to the switchover notification from the server 1, it is made possible to simultaneously carry out the software update or the reversion for all of the clients requiring the software update. Therefore,another conventional problem is also solved. The problem occurs in the software update processing, which changes interfaces between a server and clients, across a plurality of machines . This is because the simultaneous switchover for a short time is possible also in the software update processing across a plurality of machines. It is also because the simultaneous switchover of a plurality of software and a plurality of clients is possible similarly in a short time even when the switchover processing fails and even when a problem occurs after the switchover. According to this embodiment, the problem of a service suspension for a long time is solved also in a software update across a plurality of machines.

Note that the configuration, in which the server 1 instructs each of the clients to perform the software update, is shown in this embodiment. However, the present invention can be carried out in other various embodiments. For example, the functions of the server 1 such as the file delivery and software update information management may be achieved by a plurality ofservers. Alternatively, a configuration in which each client has functions of the server 1 may be adopted.

Furthermore, the configuration in which one machine has one client is shown in this embodiment. However, the present invention is not limited to this configuration. One machine may have a plurality of clients and a plurality of services, and a plurality of software in one client may be updated simultaneously.' Moreover, a unit of the software update may not be a unit of a program unlike in the case of the embodiment. The unit of the software update may be a part of a program, such as functions, a driver and dynamic link libraries. Additionally, the present invention is not limited to the software update for the server-client configuration. The present invention is applicable, for example, to a software update targeting only a server or a client. Alternatively, the present invention is also applicable to a simultaneous software update of a plurality of electronic devices which are not distinguished by a logical relation indicating, for example, server and client.

While this invention has been described in connection with certain exemplary embodiments, it is to be understood that the subject matter encompassed by way of this invention is not to be limited to those specific embodiments. On the contrary, it is intended for the subject matter of the invention to include all alternatives, modifications and equivalents as can be included within the spirit and scope of the following claims.

Further, it is the inventor's intent to retain all equivalents of the claimed invention even if the claims are amended during prosecution.

## Claims

1. A software update system for updating software of a plurality of machines from old software to new software through a network, said software update system comprising:
a server which delivers new software to any other machines through the network and then sends a switchover notification from the old software to the new software to each of the machines to which the new software having been delivered; and
a client which loads the new software which was received from the server to an area of memory which is different from the area where an old software has been placed and running and switches the old software to the new software on the memory when the switchover instruction is received from the server.

2. The software update system according to claim 1, wherein the client switches the old software to the new software by rewriting an address which is referred to by a program on the memory, to an address indicating the new software.

3. The software update system according to claim 1, wherein the client switches the old software to the new software by rewriting a destination of branch instruction from an entry address of the old software in an execution code of the program on the memory into an entry address of the new software corresponding to the old software.

4. The software update system according to claim 2, wherein the server sends a reversion notification to each of the clients when the server is notified an occurrence of a failure of the switchover processing at any of the clients and the clients each of which receives the reversion notification performs switchover from the new software to the old software according to the reversion notification received from the server.

5. The software update system according to claim 4, wherein the server sends the reversion notification to each of the clients when the server is notified an occurrence of a failure in the new software after the switchover at any of the clients instead of the occurrence of the failure of the switchover processing at the clients.

6. A client apparatus for a software update from old software to new software through a network, said client apparatus comprising:
a switchover processing unit which loads the new software having been received from a server though the network to an area of memory which is different from the area where the old software has been placed and running and switches the old software to the new software when a switchover instruction is received; and
a software update control unit which sends the switchover instruction to the switchover processing unit when a switchover notification is received from the server.

7. The client apparatus according to claim 6, wherein the switchover processing unit switches the old software to the new software by rewriting an address which is referred to by a program which calls the old software on the memory, to an address indicating the new software.

8. The client apparatus according to claim 6, wherein the switchover processing unit switches the old software to the new software by rewriting a destination of branch instruction of a program which calls the old program on the memory from an entry address of the old software in an execution code of the program into an entry address of the new software corresponding to the old software.

9. The client apparatus according to claim 6, wherein the switchover processing unit switches from the new software to the old software when a reversion instruction is received from the software update control unit which has received a reversion notification from the server.

10. A server apparatus for updating software of a plurality of clients from old software to new software through a network, said server apparatus comprising:
a software update control unit which delivers new software to any other clients through the network, and then sends a notification of switchover from old software to new software to each of the clients through the network; and
a software update information management unit which records a software update history of the clients therein based on software update responses of the clients sent from the clients.

11. The server apparatus according to claim 10, wherein the software update control unit, upon notifications of a failure in switchover processing or in new software after the switchover processing at any of the clients, identifies software and clients to be reverted for clients to recover failure based on the software update history of the software update information management unit, and sends a reversion notification to the clients which are identified that the reversion is required.

12. A software update method of updating software of a plurality of clients from old software to new software by a server through a network, said software update method comprising:
delivering a file of the new software from the server to any of the clients;
loading at the client new software delivered from the server to an area of memory which is different from the area where the old software has been placed and running;
sending from the server to each client a switchover notification which indicates switchover from the old software to the new software; and
switchover at the client from the old software to the new software according to the switchover notification received from the server.

13. The software update method according to claim 12, further comprising:
reporting a failure at the client to the server when a failure is detected in the switchover step or in the new software;
sending a reversion notification from the server to each of the clients for switchover to the old software from the new software affected by the failure having been detected based on the failure report; and
reverting at each clients from the new software to the old software based on the reversion notification having been received from the server.

14. The software update method according to claim 12, wherein the switchover is rewriting an address which is referred to by a program which call the old program on the memory, to an address indicating the new software from an address indicating the old software.

15. The software update method according to claim 12, wherein the switchover is rewriting a destination of branch instruction in an execution code of the program which calls the old program on the memory from an entry address of the old software to an entry address of the new software corresponding to the old software.
